# EUROPÄISCHE PATENTSCHRIFT

(11) **EP 0 295 594 B1**
(45) Veröffentlichungstag und Bekanntmachung des Hinweises auf die Patenterteilung: **15.12.1993**
(21) Anmeldenummer: 88109334.8
(22) Anmeldetag: 11.06.1988
(51) Int. Cl.: A47L 9/28, D01H 11/00

(54) **Vakuum-Reinigungsanlage**
Vacuum cleaning installation
Installation de nettoyage par dépression

(30) Priorität: 18.06.1987 CH 2294/87
(43) Veröffentlichungstag der Anmeldung: 21.12.1988
(73) Patentinhaber: Steinemann AG, CH-9230 Flawil (CH)
(72) Erfinder: Rechsteiner, Ernst, CH-9240 Uzwil (CH)
(74) Vertreter: Petschner, Goetz

(56) Entgegenhaltungen:
- EP-A- 0 212 978
- DE-A- 3 611 824
- US-A- 2 431 726
- PATENT ABSTRACTS OF JAPAN vol. 7, no. 114 (C-166)(1259) 18 Mai 83,& JP-A-56 134642 (TOYODA JIDO SHOKKI SEISAKUSHO K.K.) 26 August 81,

## Beschreibung

Die vorliegende Erfindung betrifft eine Vakuum-Reinigungsanlage mit Mehrfachanschlüssen von Saugdüsen für den industriellen Bedarf, insbesondere für Textilbetriebe, wie in Oberbegriff des Anspruchs 1 (Siehe zum Beispiel US-A-2 431 726).

Bei vielen industriellen Verarbeitungsprozessen, insbesondere in der Textilindustrie fallen grosse Mengen an Staub, Faserflug u. dgl. an. Um dort auch grosse Mengen Schmutz mit einem Minimum an zeitlichem und personellem Aufwand absaugen und an einem zentralen Ort kontinuierlich ansammeln zu können, sind Vakuum-Reinigungsanlagen der vorgenannten Art bekannt geworden.

Solche Anlagen sind aber relativ voluminös und weisen hohe Strömungsverluste wegen langer Rohrwege insbesondere zwischen Filterkessel und der Saugseite des Vakuumgebläses auf. Zudem neigen gerade diese Rohrwege durch Vibrationserscheinungen zu einem nur schwer zu dämpfenden hohen Geräuschpegel.

Die gleiche Anmelderin hat deshalb eine neue Vakuum-Reinigungsanlage unter dem Gesichtspunkt einer kompakten, strömungsgünstigen und geräuscharmen Konzeption geschaffen, die sich dadurch auszeichnet, dass das Ansaugrohr zwischen dem Filterkessel und der Saugseite des Vakuumgebläses gleichzeitig Tragsäule für den Filterkessel ist. Entsprechend der, die Tragfähigkeit garantierenden Dimensionierung ist eine solche Säule auch bei höchsten Strömungsgeschwindigkeiten der Saugluft relativ Vibrationsarm und somit weniger geräuschintensiv, ferner ergibt dies eine hochkompakte Bauweise mit kürzesten Strömungswegen zwischen Filterkessel und Vakuumpumpe.

Aufgabe der vorliegenden Erfindung ist es nun, Vakuum-Reinigungsanlagen der vorgenannten Art weiter so auszugestalten, dass diese sich in Abhängigkeit ihrer saugseitigen Belastung selbst auf einen mittleren Betriebszustand bei sparsamstem Energieverbrauch einregeln, um den heutigen Anforderungen bezüglich Energieeinsparung zu genügen.

Dies wird erfindungsgemäss durch das kennzeichen des Anspruchs 1 erseicht, im Verbindung mit den Merkmalen des Oberbegriffs.

Damit wird es möglich, bei jeder Saugdruckänderung im saugseitigen Strömungsweg innerhalb vorgegebener Druckbereiche durch Beeinflussung der Motordrehzahl die Luftfördermenge anzupassen und damit den Energiebedarf zu optimieren, wobei die gleichzeitige Ansteuerung des Druckregelventils Druckstösse im System verhindert, wobei die hohe Stabilität der Tragsäule ein direktes Anschlagen von Druckfühler und Druckregelventil an der Säule gestattet.

Ferner ergibt sich eine vorteilhafte Ausgestaltung bezüglich der Regelung der Drehzahl des Motors, wenn der drehzahlveränderliche Motor in Drehstrommotor in Stern-Dreieck-Schaltung und sein Regelglied ein Stern-Dreieck-Schalter ist.

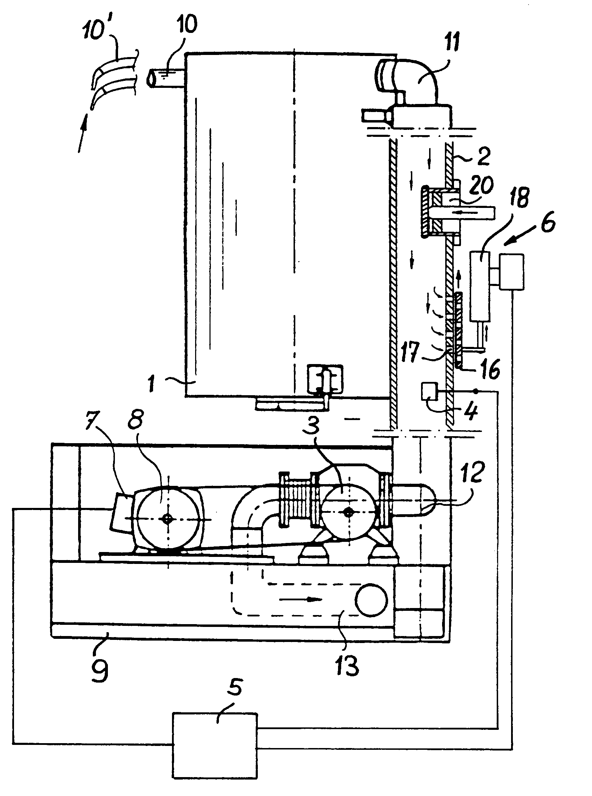

Eine beispielsweise Ausführungsform des Erfindungsgegenstandes ist nachfolgend anhand der Zeichnung, welche eine erfindungsgemässe Vakuum-Reinigungsanlage im Funktionsschema zeigt, näher erläutert.

Die hier dargestellte Vakuum-Reinigungsanlage umfasst einen Filterbehälter 1, in den einerseits eine dem Mehrfachanschluss von Saugdüsen 10′ dienende Vakuumleitung 10 einmündet und der andrerseits über ein schallgedämpftes Ansaugrohr 2 mit der Saugseite eines Vakuumgebläses 3 in Strömungsverbindung steht.

Bei einer bevorzugten Ausführungsform ist das genannte Ansaugrohr 2 gleichzeitig als Tragsäule für den Filterkessel 1 ausgebildet, wobei sich die Tragsäule 2 an einem Grundrahmen 9 abstützt und über Anschlussflansche 11 mit dem Filterkessel 1 resp. 12 mit der Saugseite des Vakuumgebläses 3, welches zusammen mit einem Antriebsmotor 8 auf dem Grundrahmen 9 aufgeflanscht ist, in Strömungsverbindung steht. Druckseitig mündet das Vakuumgebläse 3 an einem geeigneten Rohranschluss-Stutzen 13 aus.

Soweit sind solche Vakuum-Reinigungsanlagen ansich bekannt, womit auf eine weitergehende Beschreibung von Aufbau und Funktionsweise abgesehen werden kann.

Um nun zu vermeiden, dass eine solche Vakuum-Reinigungsanlage unabhängig der in Betrieb genommenen Saugdüsen 10′ ein ständig maximales, Spitzenbelastungen genügendes Vakuum erzeugt, sind nunmehr Massnahmen getroffen, welche gestatten, dass sich die Anlage selbst in Abhängigkeit ihrer saugseitigen Belastung auf einen mittleren Betriebszustand bei sparsamstem Energieverbrauch einregelt.

Hierfür ist im Strömungsweg des tragsäulenförmigen Ansaugrohres 2 ein Druckfühler 4 angeordnet, der über eine Programm-Steuer-Stufe 5 ein Druckregelventil 6 im Ansaugrohr 2 sowie ein Regelglied 7 des hier nun drehzahlveränderlichen Motors 8 steuert.

Für eine einfache bauliche Konzeption umfasst das Druckregelventil 6 einen Schieber 16 an der Aussenwandung der Tragsäule 2, welcher mit Durchbrechungen 17 in der Wandung der Säule zusammenwirkt. Am Schieber 16 greifen dabei geeignete, elektrisch ansteuerbare Stellantriebsmittel 18 an.

Als drehzahlveränderlicher, leicht regelbarer Motor 8 kann ein Drehstrommotor in Stern-Dreieck-Schaltung Anwendung finden, dessen Regelglied 7 dann ein Stern-Dreieck-Schalter ist.

Diese vorbeschriebenen Mittel gestatten nun auf relativ einfache Weise eine optimale Aussteuerung der Vakuum-Reinigungsanlage.

Beispielsweise kann nun die Steuerung so erfolgen, dass zur Inbetriebnahme der Vakuum-Reinigungsanlage bei offenem Druckregelventil 6 der Motor 8 in Sterndreieckanlauf gebracht und dann, mit Zeitverzögerung, das Druckregelventil 6 geschlossen wird. Damit gelangt die Anlage in Teillastbetrieb.

Mit dem Einsetzen mehrerer Saugdüsen 10′ wird dann der Druckfühler 4 einen Druckabfall, beispielsweise P -275, feststellen, was mit einem eingestellten Schwellwert- oder Referenzsignal in der Programm-Steuerstufe 5 verglichen wird, worauf das Druckregelventil 6 mit einstellbarer Verzögerung etwas geöffnet wird, eine Umschaltung des Motors 8 auf höhere Drehzahl erfolgt und dann das Druckregelventil 6 wieder geschlossen wird, womit sich die Anlage auf Vollastbetrieb eingeregelt hat.

Steigt dann der Druck infolge Stillsetzung von Saugdüsen 10′ auf einen oberen Grenzwert an, beispielsweise P -325, wird wieder das Druckregelventil 6 nach einer einstellbaren Zeitverzögerung leicht geöffnet, der Motor 8 etwa für 10 Sec. aus- und dann auf niedrige Drehzahl um- und wieder eingeschaltet, wonach die Anlage nach verzögertem Schliessen des Druckregelventils 6 wieder auf Teillastbetrieb eingeregelt ist.

Sind alle Saugdüsen 10′ stillgesetzt, wird der Druckfühler 4 einen Druckanstieg feststellen und beispielsweise bei einem Druck von P -375 eine Umschaltung auf Leerlauf veranlassen. Hierfür wird zunächst das Druckregelventil 6 geöffnet, bis ein genügender Druckabfall, beispielsweise P -100, erreicht ist, worauf der Motor 8 von Dreieck auf Stern umgeschaltet werden kann und sich der Leerlaufbetrieb einstellt.

Fällt dann der Druck unter einen Grenzwert, etwa P -95, so erfolgt durch Umschaltung des Motors 8 von Stern auf Dreieck wieder eine Regelung auf Teillastbetrieb. Hierbei bleibt natürlich das Druckregelventil 6 geschlossen.

Ein Sicherheitsventil 20 schützt dabei die Anlage gegen Ueberdruck, der etwa bei P -380 liegen kann.

Selbstverständlich ist die erfindungsgemässe Vakuum-Reinigungsanlage nicht auf das vorbeschriebene Ausführungsbeispiel beschränkt, sondern gestattet im Rahmen der Erfindung eine grosse Anzahl von Modifikationen.

Beispielsweise ist an Stelle des beschriebenen Motors ein anderer Typ einsetzbar, soweit eine Drehzahlregelung möglich ist. Ferner können innerhalb der Strömungswege weitere Druckfühler angeordnet sein, um mittels weiterer Referenzsignale die Steuerung der Anlage zu verfeinern. Ferner kann das Druckregelventil beliebiger Bauart sein.

Unabhängig weiterer Massnahmen ist es nunmehr möglich, eine Vakuum-Reinigungsanlage für unterschiedlichste Leistungsbereiche auszulegen, die nicht nur äusserst kompakte Bauform aufweist und optimal schallgedämpft ist, sondern sich zudem selbst in Abhängigkeit ihrer saugseitigen Belastung auf einen mittleren Betriebszustand bei sparsamstem Energieverbrauch einregelt.

## Patentansprüche

1. Vakuum-Reinigungsanlage mit Mehrfachanschlüssen von Saugdüsen für den industriellen Bedarf, insbesondere für Textilbetriebe, bei welcher Anlage eine dem Mehrfachanschluss der Saugdüsen dienende Vakuumleitung in einen, an einem Maschinenrahmen abgestützten Filterbehälter einmündet, der über ein schallgedämpftes Ansaugrohr (2) mit der Saugseite eines Vakuumgebläses (3) in Strömungsverbindung steht, wobei saugseitig zwischen Vakuumgebläse (3) und Filterkessel (1) im schallgedämpften Ansaugrohr (2) ein Druckfühler (4) angeordnet ist, der ein Regelglied (7) eines drehzahlveränderlichen, das Vakuumgebläse (3) antreibenden Motors (8) steuert und wobei ferner ein Druckregelventil (6) einen motorisch verstellbaren Schieber (16) umfasst, welcher mit Durchbrechungen (17) in der Wandung des Ansaugrohres (2) zusammenwirkt, dadurch gekennzeichnet, daß der Druckfühler über eine Programm-Steuer-Stufe (5) das Druckregelventil (6) im Ansaugrohr (2) steuert, und, dass ferner Druckfühler (4) und Druckregelventil (6) an einem, gleichzeitig eine Tragsäule für den Filterkessel (1) bildenden Ansaugrohr (2) angeordnet sind.

2. Vakuum-Reinigungsanlage nach Anspruch 1, dadurch gekennzeichnet, dass der drehzahlveränderliche Motor (8) in Drehstrommotor in Stern-Dreieck-Schaltung und sein Regelglied (7) ein Stern-Dreieck-Schalter ist.

## Claims

1. Vacuum cleaning installation with multiple connections for suction nozzle attachments for industrial purposes, in particular for the textile industry, comprising a machine frame, which supports a filter receptacle, or chamber, into which a vacuum pipe for connecting a plurality of suction nozzles leads; the filter receptacle being in air-flow connection with the suction side of a vacuum blower (3), via a muffled suction pipe (2'), wherein a pressure-sensing device (4) is disposed suction-side in the muffled suction pipe (2) between the vacuum fan (3) and the filter chamber (1) controlling a pressure-regulating member (7) of a variable-speed motor (8), which drives the vacuum fan (3) and further
the pressure-regulating valve (6) comprises a motor-regulated slide (16), which interacts with perforations (17) in the wall of the suction pipe (2), characterized in that the pressure sensing-device (4) disposed suction-side in the muffled suction pipe (2) controlling of a program control stage (5) and the pressure-sensing device (4) and the pressure-regulating valve (6) are disposed on a suction pipe (2), which forms at the same time a supporting column for the filter chamber (1).

2. The vacuum cleaning installation as defined in claim 1, characterized in that the variable-speed motor (8) is a star-delta- connected alternative motor, and the regulating member (7) thereof is a star-delta switch.

## Revendications

1. Installation de nettoyage par dépression avec des raccordements multiples de buses d'aspiration pour des besoins industriels, en particulier pour des usines de textile, sur l'installation de laquelle, une ligne de dépression servant au raccordement multiple des buses d'aspiration, débouche dans un conteneur à filtre prenant appui sur un cadre de machine, qui est en liaison d'écoulement par l'intermédiaire d'une tubulure d'aspiration insonorisée (2) avec le côté d'aspiration d'une soufflante à dépression (3), un capteur de pression (4) étant disposé du côté de l'aspiration entre la soufflante à dépression (3) et le caisson à filtre (1) dans la tubulure d'aspiration insonorisée, cette sonde de pression que commande un organe de régulation (7) d'un moteur (8) à vitesse de rotation variable entraînant une soufflante à dépression (3) et, en outre, une vanne de régulation de pression (6) comprenant un registre (16) réglable par moteur, registre coopèrant avec des découpes (17) dans la paroi de la tubulure d'aspiration (2) caractérisée en ce que le capteur de pression commande par un étage de commande par programme (5) la vanne de régulation de pression (6) dans la tubulure d'aspiration (2) et en outre le capteur de pression (4) et la vanne de régulation de pression (6) sont disposés sur la tubulure d'aspiration (2) formant simultanément une colonne support pour le caisson à filtre (1).

2. Installation de nettoyage par dépression selon la revendication 1, caractérisée en ce que, le moteur (8) à vitesse de rotation variable est un moteur à courant triphasé en montage étoile-triangle et que son organe de régulation (7) est un commutateur étoile-triangle.
